# EUROPEAN PATENT SPECIFICATION

(11) **EP 1 767 976 B1**
(45) Date of publication and mention of the grant of the patent: **28.12.2011**
(21) Application number: 06254936.5
(22) Date of filing: 25.09.2006
(51) Int. Cl.: G02B 7/10, G02B 13/00

(54) **Lens barrel, lens barrel controller, camera and personal digital assistant apparatus**
Objektivtubus, Steuerung für Objektivtubus, Kamera und PDA-Gerät
Barillet de lentille, contrôleur de barillet de lentille, caméra et appareil d'assistant numérique personnel

(30) Priority: 26.09.2005 JP 2005278620
(43) Date of publication of application: 28.03.2007
(73) Proprietor: Ricoh Company, Ltd., Tokyo 143-8555 (JP)
(72) Inventor: Yamano, Tohru, Tokyo 143-8555 (JP); Sugiura, Koichi, Tokyo 143-8555 (JP)
(74) Representative: Leeming, John Gerard

(56) References cited:
- JP-A- 2004 347 890
- US-A- 5 926 322
- US-B1- 6 256 458

## Description

The present invention relates to a so-called collapsible mount type camera, particularly a lens barrel favorably when using a highly eccentricity-sensitive, high-performance lens barrel, a lens barrel controller, and a camera and a personal digital assistant apparatus.

With increasing quality in photographed images, that is, with developments such as increasing performance of lenses and miniaturization as required by users, the number of image pickup devices such as digital cameras using so-called collapsible mount type photographing lenses in which a lens barrel is stored inside the body of an image pickup apparatus. Further, since not only the miniaturization but also reduced thickness are required, it has been important to reduce the thickness dimension of the lens barrel in the collapsed/stored state to the limit. In order to cope with the demands for the enhanced performance and the reduced thickness of the image pickup apparatus, there is a technique to suppress degradation of an image with even use of a lens having high eccentric sensitivity by restraining the position of the lens on photographing. By so doing, the lens barrel having high performance and a reduced thickness can be realized. For this purpose, there have been many proposals in the prior art. Such are proposed in five patent documents recited below, for example. Patent Document 1: JP-A 2004-252365 discloses a technique in which a male helicoid screw of a rotary frame is released from meshing with a female helicoid screw of a supporting frame in a photographing position, and a projection of the rotary frame is engaged with a position-restraining guide engaging portion of the supporting frame, thereby restraining the positions of lens groups.

Patent Document 2: JP-A 2003-75711 discloses a technique in which a second lens group can be positionally restrained relative to a first lens group by contacting an abutting portion of a supporting frame of the second lens group with a cam follower of the first lens group through urging with an urging means in photographing.

Patent Document 3: JP-A 2002-350706 discloses a technique in which a guide member is integrally fixed to a first lens retaining frame and extends along an optical axis, and a second lens retaining frame is moved and guided along the optical axis by the guide member, and thereby the second lens group can be positionally restrained relative to the first lens group.

Patent Document 4: JP-A 2000-275495 discloses a technique in which a cam groove is formed with a groove or hole in a cam ring, a spring means is formed with plural holes opened adjacent to the came groove, and a cam follower is grasped in the cam groove with a retaining force by the spring means, thereby restraining the positions of lens grooves.

However, as to the technique disclosed in Patent Document 1, since the meshing of the helicoid threads is released in the photographing state, there is a fear in meshing the helicoid meshing again in the motion from the photographing state to the collapsed state.

According to the technique disclosed in Patent Document 2, since the lens frame member is press contacted with the cam follower with the urging means in the photographing state, the dimension of the frame member in the optical axis direction increases to thicken the collapsed state.

According to the technique disclosed in Patent Document 3, since the first lens retaining frame is integrally formed with the guide member for the second lens retaining frame, the collapsed state is thickened if the distance between the first lens group and the second lens group is great in the photographing state.

According to the technique disclosed in Patent Document 4, since plural holes are formed in addition to the cam groove for elastically deforming the cam groove, the size of the cam frame becomes greater, thereby thickening the collapsed state.

US 6 256 458 discloses a collapsible lens housing.

The present invention, which has been accomplished in view of the above circumstances, is aimed at providing a lens barrel which can give a good image by appropriately restraining the positions of the lens groups in photographing and can reduce its dimension along the optical axis direction in the collapsed time. The invention is also to provide a lens barrel controller for that lens barrel, and a camera and a portable digital assistant using that lens barrel.

More specifically, a first object of the present invention is to provide a lens barrel which can appropriately restrain the positions of lens groups in a photographing state and improve the lens performance and the quality of obtained images by employing a simple construction without increasing the dimension of the lens barrel along the optical axis direction when being collapsed.

It is a second object of the present invention is to provide a camera which can appropriately restrain the positions of the lens groups in a photographing state and can enhance the lens performance and the quality of obtained images by employing a simple construction without increasing the dimension of the camera along the optical axis direction in a collapsed state.

It is a third object of the present invention to provide a portable digital assistant device which can appropriately restrain the positions of the lens groups in a functional portion of a camera in a photographing state with a simple construction and can enhance the lens performance and the quality of obtained images without increasing the dimension of the PDA device along the optical axis direction in a collapsed state.

It is a fourth object of the present invention to provide a controller for a lens barrel, which controller can appropriately judge a press contacted state of a cam follower upon the terminal end portion of the cam groove and enables the former to be assuredly press contacted upon the latter.

In order to solve the above problem, the present invention provides a lens barrel, a lens barrel controller, a camera and a personal digital assistant as defined in the appended claims.

The following (1) to (6) are preferred embodiments of the lens barrel according to the present invention. Any combinations of (1) to (6) are also preferred embodiments of the lens barrel according to the present invention unless any contradiction occurs.
(1) Said one lens group of which the position is restrained through the cam follower being abutted upon the terminal end portion of said cam groove is a lens group having the highest eccentricity sensitivity among said plurality of lens groups.
(2) The lens barrel further comprises another lens retaining flame adapted to retain at least another lens group among said plurality of lens groups; and another cam follower provided on said another lens retaining frame and wherein said rotary cylinder has another cam groove adapted to engage with said another cam follower, said rotary cylinder being configured to move said another lens retaining frame forward and backward along an optical axis direction of the lens group through being rotated; and
   wherein said liner member has a straight groove adapted to engage with said another cam follower and to restrain rotation of said another lens retaining frame, said liner member being configured to prevent the rotation of said another lens retaining member and allow forward and backward movement of said another lens retaining member; and wherein the cam groove corresponding to said one lens group of which position is restrained through the cam follower being abutted upon the terminal end portion of the cam groove is formed with no play to be left at the terminal end portion in a photographing position in the photographing state, whereas the straight groove and the cam groove corresponding to said another lens group are each formed to leave an appropriate play along a direction of the straight groove or the cam groove without being ended at the position in the photographing state.
(3) When the lens barrel is moved from the collapsed state to the photographing state, a driving speed of said rotary cylinder is lowered before the lens barrel reaches the photographing state, and the driving of the rotary cylinder is stopped in a predetermined time period after the lens barrel reached the photographing state.
(4) Position count information corresponding to a driven amount of said rotary cylinder is detected, said position count information is counted during said predetermined time period, and the driving of the rotary cylinder is stopped by judging termination of said predetermined time period at a point of time when the number of counts reaches a predetermined maximum count.
(5) A lapse of said predetermined time period is judged by confirming a lapse of time
(6) After the lens barrel reached the photographing state and then said predetermined time period lapsed and the driving of the rotary cylinder was stopped, an operation that the rotary cylinder driven was driven for said predetermined time period is repeated at least one of every a preset time interval and a desired timing.

The following (1) and (2) are preferred embodiments of the controller according to the present invention. A combination of (1) and (2) is also a preferred embodiment of this controller.
(1) The controller comprises a judging unit for judging whether there is a change in the state of the positional information signals from the displaced amount detector or not, and the judging unit judges that there is no change in the state, when no change is seen in the state of said positional information signal for not less than a preset judging time period and when the judging unit judges that there is no change in the state of the positional information signals, the judging unit judges that the positions of the lens groups are in a restrained state and the driving of the rotary cylinder with the driving unit is stopped.
(2) Considering that said preset judging time period is constituted by a first judging time period before the rotary cylinder reaches the photographing position and a second judging time period after the rotary cylinder reached the photographing position, said second judging time period is shorter than the first one.

The present invention provides the lens barrel, the lens barrel controller, the camera and the personal digital assistant apparatus, in which good images can be obtained by appropriately restraining the positions of the lens groups in the photographing state and can reduce the dimension-along the optical axis direction in the collapsed state.

According to the lens barrel of the first aspect of the present invention, singe the construction recited above is employed, the positions of lens groups can be appropriately restrained in a photographing state and the lens performance and the quality of obtained images can be improved, by employing the simple construction, without increasing the dimension of the lens barrel along the optical axis direction when being collapsed.
(1) According to the preferred embodiment (1) of the lens barrel of the first aspect of the present invention, since the construction recited above is employed, the productivity of the lens barrel can be enhanced by effectively mitigating the positional accuracy requirement for the other lens group(s) other than that of the lens having the highest eccentricity sensitivity.
(2) According to the preferred embodiment (2) of the lens barrel of the first aspect of the present invention, since the construction recited above is employed, the productivity of the cam-formed member can be enhanced by effectively mitigating the accuracy in a terminal end position of the cam engaging with the cam follower of the lens group other than the lens group having the largest eccentricity sensitivity.
(3) According to the preferred embodiment (3) of the lens barrel of the first aspect of the present invention, since the construction recited above is employed, unreasonable force can be prevented from being applied to the cam follower and the cam-formed member by mitigating impact through collision between a terminal end portion of the cam groove and the cam follower when the lens barrel is moved to the photographing state.
(4) According to the preferred embodiment (4) of the lens barrel of the first aspect of the present invention, since the construction recited above is employed, the cam follower can be appropriately pushed against the terminal end portion of the cam groove.
(5) According to the preferred embodiment (5) of the lens barrel of the first aspect of the present invention, since the construction recited above is employed, the cam follower can be easily pressed upon the terminal end portion of the cam groove.
(6) According to the preferred embodiment (6) of the lens barrel of the first aspect of the present invention, since the construction recited above is employed, the cam follower can be assuredly kept to be pressed upon the terminal end portion of the cam groove,.

According to the camera of the second aspect of the present invention, since the construction recited above is employed, the positions of lens groups can be appropriately restrained in a photographing state and the lens performance and the quality of obtained images can be improved, by employing the simple construction, without increasing the dimension of the lens barrel along the optical axis direction when being collapsed.

According to the personal digital assistant apparatus of the third aspect of the present invention, since the construction recited above is employed, the positions of lens groups in the camera functioning portion can be appropriately restrained in a photographing state and the lens performance and the quality of obtained images can be improved, by employing the simple construction, without increasing the dimension of the lens barrel along the optical axis direction when being collapsed.

According to the lens barrel controller of the fourth aspect of the present invention, since the construction recited above is employed, it can be appropriately judged that the cam follower is pushed to the terminal end portion of the cam groove, thereby assuredly pushing the cam follower upon the terminal end portion of the cam groove.

According to the lens barrel controller of the preferred embodiment (1) of the fourth aspect of the present invention, since the construction recited above is employed, it can be more appropriately judged that the cam follower is pushed to the terminal end portion of the cam groove, thereby more assuredly pushing the cam follower upon the terminal end portion of the cam groove.

According to the lens barrel controller of the preferred embodiment (2) af the fourth aspect of the present invention, since the construction recited above is employed, it is possible to reduce the consumption of the electric power of the driving system involved for pushing the cam follower to the terminal end portion of the cam groove as well as the impact at the time of pushing.

According to the camera of the fifth aspect of the present invention, since the construction recited above is employed, it can be appropriately judged that the cam follower is pushed to the terminal end portion of the cam groove in the lens barrel, thereby assuredly pushing the cam follower upon the terminal end portion of the cam groove.

According to the personal digital assistant apparatus of the sixth aspect of the present invention, since the construction recited above is employed, it can be appropriately judged that the cam follower is pushed to the terminal end portion of the cam groove in the lens barrel, thereby assuredly pushing the cam follower upon the terminal end portion of the cam groove.

The present invention is described below with reference to exemplary embodiments and the attached drawings, wherein:
Fig.1 is a perspective view showing the outer construction of a lens barrel according to a first embodiment of the present invention.
Fig. 2 is a vertical cross-sectional view showing a construction in a section passing an optical axis of the lens barrel of Fig. 1.
Fig. 3 is a decomposed perspective view for illustrating the construction of the lens barrel of Fig. 1.
Fig. 4 is a schematically developed view for illustrating a detailed construction of cam mechanisms in the lens barrel of Fig. 1.
Fig. 5 is a view showing an A-portion of the developed view of Fig. 4 in an enlarged detail.
Fig. 6 is a block diagram schematically showing the construction of a principal portion of a lens barrel controller according to a second embodiment of the present invention.
Fig. 7 is a timing chart for illustrating an operation sequence in the lens barrel controller in Fig. 6.
Fig. 8 is a flow chart for illustrating the operations of the lens barrel in Fig. 6.
Fig. 9 is a timing chart for illustrating the operations of the lens barrel controller in the flow chart in Fig. 8.
Fig. 10 is a timing chart for illustrating the operations of the lens barrel controller in the flow chart of Fig. 8.
Fig. 11 is a flow chart for illustrating the operations in repeated pushing operations in the lens barrel controller of Fig. 6.

In the following, the lens barrel, the lens barrel controller, the camera and the portable digital assistant apparatus according to the present invention will be explained based on specific embodiments by referring to the drawings.

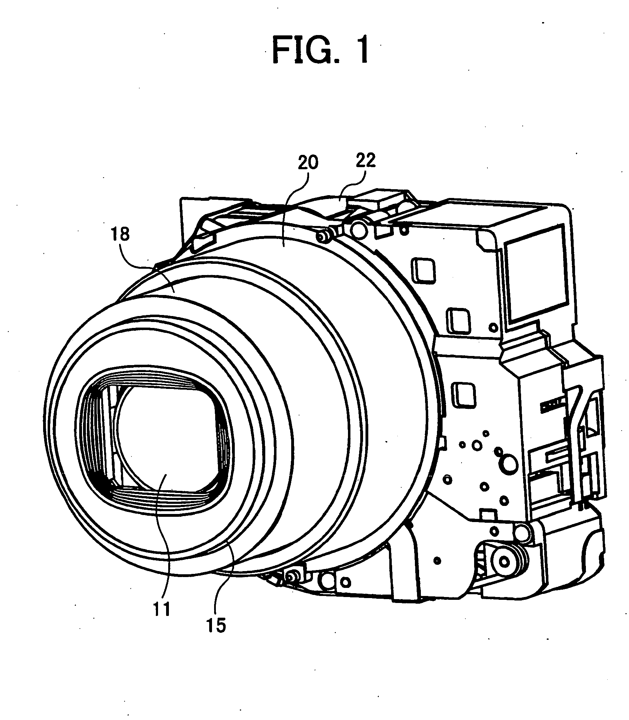

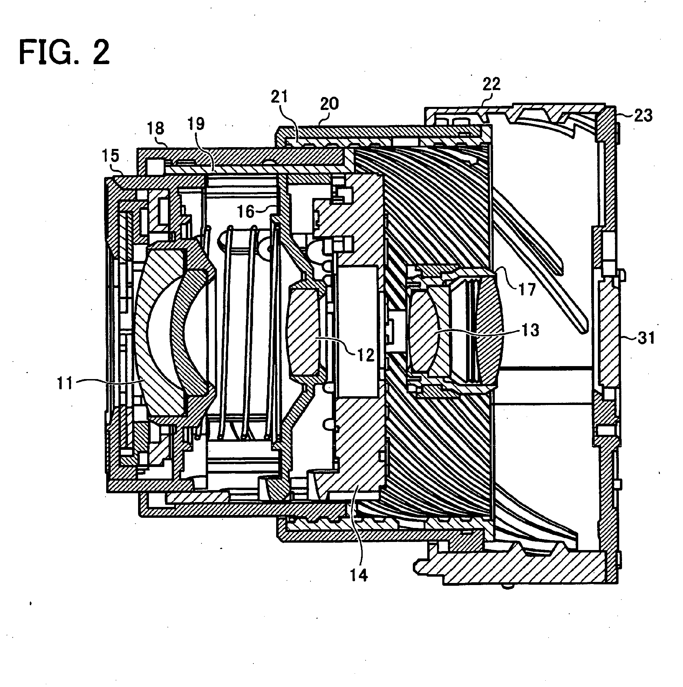

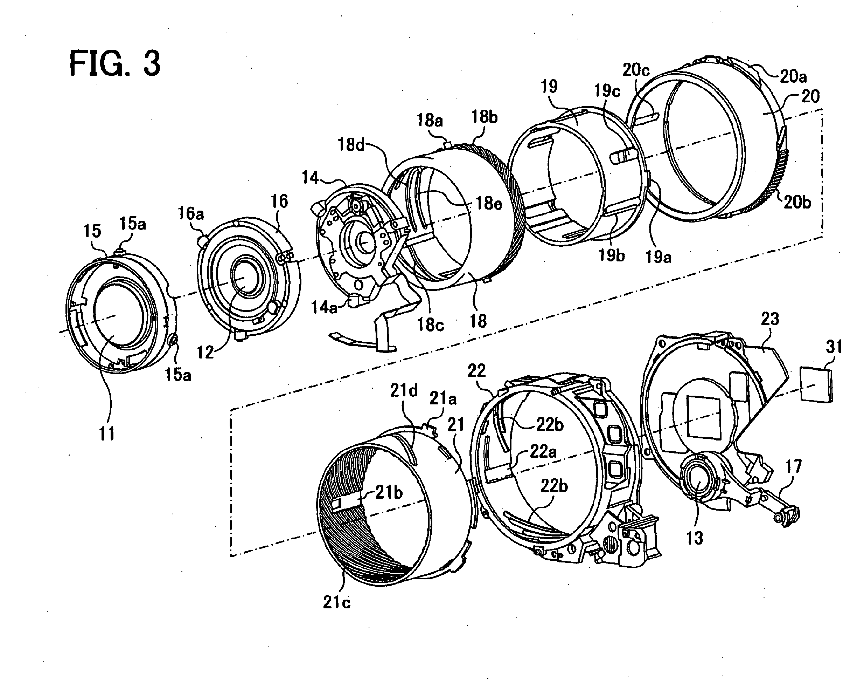

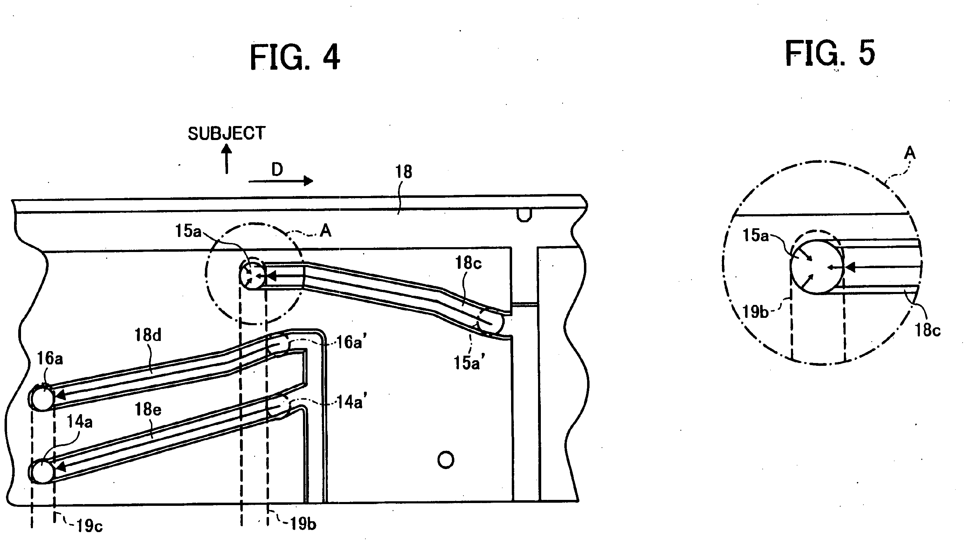

Figs. 1 to 5 show the construction of a lens barrel according to the first embodiment of the present invention. Fig. 1 is a schematically perspective view of an outer construction of the entire lens barrel in the photographing state. Fig. 2 is a vertically sectional view, as viewed in a section, of the lens barrel of Fig. 1 containing an optical axis thereof Fig. 3 is a decomposed perspective view showing a principal portion of the lens barrel of Fig. 1 as decomposed. Fig. 4 is a schematically developed view showing a main cam construction of the lens barrel of Fig. 1 according to the present invention. Fig. 5 is a detailed view showing an A-portaon of Fig. 4 in an enlarged scale. The lens barrel shown in Figs. 1 to 3 comprises a first lens group 11, a second lens group 12, a third lens group 13, a shutter unit 14, a first lens retaining frame 15, a second lens retaining frame 16, a third lens retaining frame 17, a first rotary cylinder 18, a first liner 19, a second rotary cylinder 20, a second liner 21, a fixed frame 22, and a lens barrel base 23.

Fig. 1 and Fig. 2 show the photographing state. In the photographing state, the first lens group 11, the second lens group 12 and the third lens group 13 are successively arranged from a side of a subject, the shutter unit 14 is inserted and placed between the second and third lens groups 12 and 13, including an aperture, and a solid-state image pickup element 31 constituted by CCD (coupled charged device), for example, is placed and arranged on a side of the third lens group 13, while being supported by the lens barrel base 23. These first to third lens groups 11 to 13 constitute a fixed focal length lens, for example.

The first lens group 11 is composed of one or more lenses (two lenses in this embodiment), and the first lens retaining frame 15 integrally retains the first lens group 11. For example, three cam followers 15a are projected from the first lens retaining frame 15, specifically from the outer peripheral face of a base end portion of the retaining frame 15 in this embodiment (The number of each set of the cam followers, cam grooves and straight grooves, etc. are in plural, for example 3 or 2 as one set, but all of them are not shown. For avoiding confusion, common reference numbers are given to plural members, as one set, having the same function).

The second lens group 12 is composed of one or more lenses (one lens in this embodiment), and the second lens retaining frame 16 integrally retains the second lens group 12. For example, three cam followers 16a are projected from the outer peripheral face of the second lens retaining frame 16. The shutter unit 14 possesses the shutter and the aperture, and for example three cam followers 14a are projected from the outer peripheral face of the shutter unit. For example, two cam followers 18a are projected from the outer periphery of a base end portion of the first rotary cylinder 18, and a helicoid portion 18b is provided as a cam follower between the cam followers 18a. Two cam followers 19a are projected from the out peripheral face of a base end portion of the first liner 19, for example. A helicoid portion 20a as a cam follower and a gear portion 20b receiving a rotary driving force are formed at appropriate areas of a base end portion of the second rotary cylinder 20, respectively Three cam followers 21a are projected from the outer peripheral face of a base end portion of the second liner 21, for example. The third lens group 13 is composed of one or more lenses (three lenses in this embodiment), and the third lens retaining frame 17 integrally retains the third lens group 13.

The first liner 19 is arranged as the liner member outside the first lens retaining frame 15, the second lens retaining frame 16 and the shutter unit 14, and the first rotary cylinder 18 is arranged outside the first liner 19. Further, the second liner 21 is arranged outside the first rotary cylinder 18, and the second rotary cylinder 20 is arranged around the second liner 21. The fixed frame is provided outside the second rotary cylinder 20. The first lens retaining frame 15, the second lens retaining frame 16, the shutter unit 14, the first liner 19, the first rotary cylinder 18, the second cylinder 21, the second rotary cylinder 20 and the fixed frame 22 are substantially coaxially arranged, while the adjacent ones are slidable relative to each other. The first liner 19 and the first rotary cylinder 18 are engaged with each other such that they are integrally moved in the optical axis direction, while being rotatable to each other in the rotating direction. The first liner 19 and the first rotary cylinder 18 are engaged with each other such that they are integrally moved in the optical axis direction, while they are rotatable relative to each other in the rotating direction. The second liner 21 and the second rotary cylinder 20 are engaged with each other such that they are integrally moved in the optical axis direction, while they are rotatable relative to each other in the rotating direction.

The first liner 19 is provided in its inner peripheral face with three straight, penetrated grooves 19b and three straight, penetrated grooves 19c, which grooves 19b and 19c are in parallel to the optical axis direction. The grooves 19b correspond to the three cam followers 15a of the first lens retaining frame 15, and the grooves 19c correspond commonly to the three cam followers 16a of the second lens retaining frame 16 and the three cam followers 14a of the shutter unit 14.

The three straight, penetrated grooves 19b provided in the first liner 19 constitute penetrated grooves to restrain the rotation of the first lens retaining frame 15, while the three straight, penetrated grooves 19c constitute penetrated grooves to restrain the rotation of the second lens retaining frame 16 and the shutter unit 14. The first rotary cylinder 18 is provided at its inner peripheral face with three cam grooves 18c, three cam grooves 18d and three cam grooves 18e. The three cam groove 18c correspond to the three cam followers 15a of the first lens retaining frame 15, and the three grooves 18d and the three grooves 18e correspond to the three cam follower 16a of the second cam follower 16 and the three cam followers 14a of the shutter unit 14, respectively. The three cam grooves 18c in the inner peripheral face of the first rotary cylinder 18 constitute cams for moving the first lens retaining frame 15 via the three cam followers 15a in the optical axis direction, respectively. The three cam grooves 18d in the inner peripheral face of the first rotary cylinder 18 constitute cams for moving the second lens retaining frame 16 via the three cam followers 16a in the optical axis direction, respectively. The three cam grooves 18e in the inner peripheral face of the first rotary cylinder 18 constitute cams for moving the shutter unit 14 via the three cam followers 14a in the optical axis direction.

That is, the three cam followers 15a of the first lens retaining frame 15 are inserted into and engaged, with the three straight, pierced grooves 19b of the first liner 19. The three cam followers 15a are also engaged with the three cam grooves 18c in the first rotary cylinder 18. The three cam followers 16a of the second lens retaining frame 16 are inserted into and engaged with the three straight, pierced grooves 19c of the first liner 19. The three cam followers 16a are engaged with the three cam grooves 18d at the inner peripheral face of the first rotary cylinder 18. The three cam followers 14a of the shutter unit 14 are inserted into and engaged with the three straight, pierced cam grooves 19c of the first rotary cylinder 19, and the cam followers 14a are also engaged with the three cam grooves 18e in the inner peripheral face of the first rotary cylinder 18. At the end portion of each of the cam grooves 18c of the first rotary cylinder 18 are formed passage grooves along the optical axis direction for guiding the cam followers 15a to the respective came grooves 18c on assembling/disassembling. At the end portion of the cam grooves 18d and 18e of the first rotary cylinder 18 are formed common passage grooves along the optical axis direction fur guiding the cam followers 16a and 14a to the came grooves 18d and 18e, respectively, on assembling/disassembling (See Fig. 4).

Further, the inner peripheral face of the second rotary cylinder 20 is provided with two interlocking grooves 20c which are in parallel to the optical axis direction and correspond to the cam followers 18a at the outer periphery of the base end portion of the first rotary cylinder 18. The interlocking grooves 20c provided at the second rotary cylinder 20 constitute straight grooves which absorb relative displacement between the second rotary cylinder 20 and the first rotary cylinder 18 in the optical axial direction and restrain the relative rotation between them. The inner peripheral face of the second liner 21 is provided with two straight grooves 21 and the helicoid portion 21c, for example, which grooves 21 and the helicoid portion 21c correspond to the cam followers 19a of the first liner 19 and the helicoid portion 18b as the cam follower of the first rotary cylinder 18, respectively. The helicoid portion 21c of the second liner 21 is engaged with that 18b of the first rotary cylinder 18 to constitute a helicoid mechanism in which as the first rotary cylinder 18 rotates relative to the second liner 21, the first rotary cylinder 18 moves to-and-fro relative to the second liner 21. In the cylindrical peripheral face of the second liner 21 are penetrated straight escape grooves 21d composed of two obliquely penetrated elongate holes through which the cam followers 18a of the first rotary cylinder 18 are inserted to be engaged with the interlocking grooves 20c of the second rotary cylinder 20. The inner peripheral face of the fixed frame 22 are provided with three straight-extended grooves 22a, for example, which are in parallel to the optical axial direction and correspond to the cam followers 21a of the second liner 21. The inner peripheral face of the fixed frame 22 is also provided with a helicoids portion 22b which corresponds to the helicoid portion 20a of the second rotary cylinder 20 as the cam follower.

The straight groove 22a provided at the fixed frame 22 constitutes a straight groove which restrains the rotation of the second liner 21 around the optical axis and allows the tn-and-fro movement of the liner 21 in the optical axis direction. The helicoid portion provided at the fixed frame 22 and that 20a of the second rotary cylinder 20 are engaged with each other to form a helicoid mechanism in which as the second rotary cylinder 20 rotates relative to the fixed frame 22, the second rotary cylinder 20 is allowed to move to-and-fro relative to the fixed frame 22.

That is, the cam followers 19a of the first liner 19 are engaged with the straight grooves 21b of the second liner 21, respectively. The cam followers 18a of the first rotary cylinder 18 are inserted into and engaged with the penetrated escape grooves 21d of the second liner 21, respectively. The helicoids portion 18b of the first rotary cylinder 18 is engaged with the helicoid portion 21c of the second liner 21. The cam followers 21a of the second liner 21 are engaged with the straight grooves 22a of the fixed frame 22a.

Therefore, although not clearly shown, a gear to be driven by a motor as a driving source meshes with a gear portion 20b of the second rotary cylinder 20. As the second rotary cylinder 20 is driven to be rotated, the helicoid portion 20a formed at the outer peripheral face of the second rotary cylinder 20 and the helicoid portion 22b at the inner peripheral face of the fixed frame 22 function to move the second rotary cylinder 20 to-and-fro in the optical axis direction, while being rotated. The rotation of the second rotary cylinder 20 is transmitted to the first rotary cylinder 18 through the engagement between the interlocking grooves 20c and the cam followers 18a, so that the first rotary cylinder 18 rotates integrally with the second rotary cylinder 20. A that time, the second liner 21 is moved to-and-fro together with the second rotary cylinder 20, while its rotation is being restrained in the state that the cam followers 21a are engaged with the straight grooves 22a. Since the rotation of the second liner 21 is restrained, the first rotary cylinder 18 rotating interlockingly with the second rotary cylinder 20 rotates relative to the second liner 21. Thereby, the first rotary cylinder 18 moves to-and-fro along the optical axis direction relative to the second liner 21 by the function between the helicoid portion 21c at the inner peripheral face of the second liner 21 and the helicoid portion 18b at the outer peripheral face of the first rotary cylinder 18. As to the first liner 19, the cam followers 19a at the outer peripheral face are engaged with the straight grooves 21b at the inner peripheral face of the second liner, so that the first liner 19 is moved integrally to-and-fro together the first rotary cylinder 18, while their relative rotation is being kept restrained.

The cam followers 15a at the outer peripheral face of the first lens retaining frame 15 are inserted into the straight, penetrated grooves 19b of the first liner 19, and engaged with the cam grooves 18c of the first rotary cylinder 18, while the rotation of the frame 15 is being restrained. As the first rotary cylinder 18 rotates, the can followers 15 move along the cam grooves 18c in the optical axis direction.

The cam followers 16a at the outer peripheral face of the second lens retaining frame 16 are inserted into the straight, penetrated grooves 19c of the first liner 19, and engaged with the cam grooves 18d of the first rotary cylinder 18, while the rotation of the frame 16 is being restrained. As the rotary cylinder 18 rotates, the cam followers 16a move along the cam grooves in the optical axis direction. Similarly, the cam followers 14a at the outer peripheral face of the shutter unit 14 are inserted into the straight, penetrated grooves 19c of the first liner 19, and engaged with the cam grooves 18e of the first rotary cylinder 18, while the rotation of the frame 14 is being restrained. As the first rotary cylinder 18 rotates, the cam followers 14a move along the cam grooves 18e in the optical axis direction. By such motions, the lens barrel is shifted from the collapsed state to the photographing direction or vice versa.

Therefore, the first lens retaining frame 15, the second lens retaining frame 16 and the shutter unit14 move straightly to-and-fro under no rotation, the first liner 19 also moves to and fro under no rotation, and the first rotary cylinder 18 moves to-and-fro under rotation. The second liner 21 moves straightly to-and-fro under no rotation, and the second rotary cylinder 20 moves to-and-fro while being rotated. The fixed frame 22 is fixed, and not moved. The third lens retaining frame 17 is driven by a motor, gears or the like not shown.

Fig. 4 is a schematic developed view of the first rotary cylinder 18 for illustrating the relationship among the cam followers 15a of the first lens retaining frame 15, the cam followers 16a of the second lens retaining frame 16, the cam follower 14a of the shutter unit 14, the cam grooves 18c, 18d and 18e of the first rotary cylinder 18, and the straight, penetrated holes 19c of the first liner 19. A construction similar to that in Fig. 4 is given to the construction in Figs. 1 to 3 at three locations at an almost equidistance in a circumferential direction.

That is, the cam followers 15a of the first lens retaining frame 15 are inserted into and engaged with the straight, penetrated grooves 19c of the first liner 19, and then engaged with the cam grooves 18c of the first rotary cylinder 18. The cam followers 16a of the second lens retaining frame 16 are inserted into and engaged with the straight, penetrated grooves 19 of the first liner 19, and then engaged with the cam grooves 18d of the first rotary cylinder 18. The cam followers 14a of the shutter unit 14 arc inserted into and engaged with the straight, penetrated grooves 19c of the first liner19, and then engaged with the cam grooves 18e of the first rotary cylinder 18. As shown, at the end portions of the cam grooves 18c of the first rotary cylinder 18 are formed with the common passage grooves along the optical axis direction to guide the cam followers 15a to the cam grooves 18c on assembling/disassembling. At the end portions of the cam grooves 18d and 18e of the first rotary cylinder 18 are formed with the common passage grooves along the optical axis direction to guide the cam followers 16a and 14a to the cam grooves 18d and 18e on assembling/disaseembling, respectively.

In the collapsed state, the cam followers 15a, 16a and 14a are located at positions 15a', 16a' and 14a' shown near the guide passages at the right side of the cam grooves 18c, 18d and 18e in the figure by imaginary lines, respectively. To attain the photographing state, since the first rotary cylinder 18 moves toward the right side in the figure as indicated by an arrow D, the cam followers 15a, 16a and 14a move to right, and the cam followers 15a, 16a and 14a relatively moves to the left side as shown in the figure. Thus, the photographing positions are positions shown by solid lines in the figure. At that time, as a portion A shown in detail in Fig. 5, the positional precision of the first lens retaining frame 15 for that first lens group 11 among the lens groups which has the highest eccentricity sensitivity is strictly controlled at the end portion of the cam groove 18c, because the cam follower 15a of the first lens retaining frame 15 abuts the end portion of the cam groove 18c with no play. Then, the straight, penetrated groove 19b has a play at its end portion. With respect to the cam followers 16a of the second lens retaining frame 16 of the second lens group 12 and the cam followers 14a of the shutter unit 14, there are slight plays at the end portions of the cam grooves 18d and 18e as well as the end portion of the straight groove 19b.

Therefore, in this state, an almost circumferential half portion of the cam followers 15a contacts an inner face of an end portion containing a tip end portion and vertically opposite upper and lower sides of a left side of the cam groove 18c, and the cam follower 15a is supported by the laterally opposite sides of the straight groove 19b as shown in Fig. 5, so that the cam follower 15a is firmly retained. Thus, it becomes possible to set, at a sufficiently high precision, the position of the first lens group having the highest eccentricity sensitivity in this embodiment, by assembling and adjusting, at a sufficiently high precision, the position of the cam follower 15a, the position of the tip end portion of the cam groove 18c and the position of the straight, penetrated groove 19b with respect to the first lens group 11. Thus, the lens performance can be effectively enhanced.

Next, a second embodiment of the present invention will be explained, which relates to a lens barrel controller for driving and controlling the lens barrel constructed above.

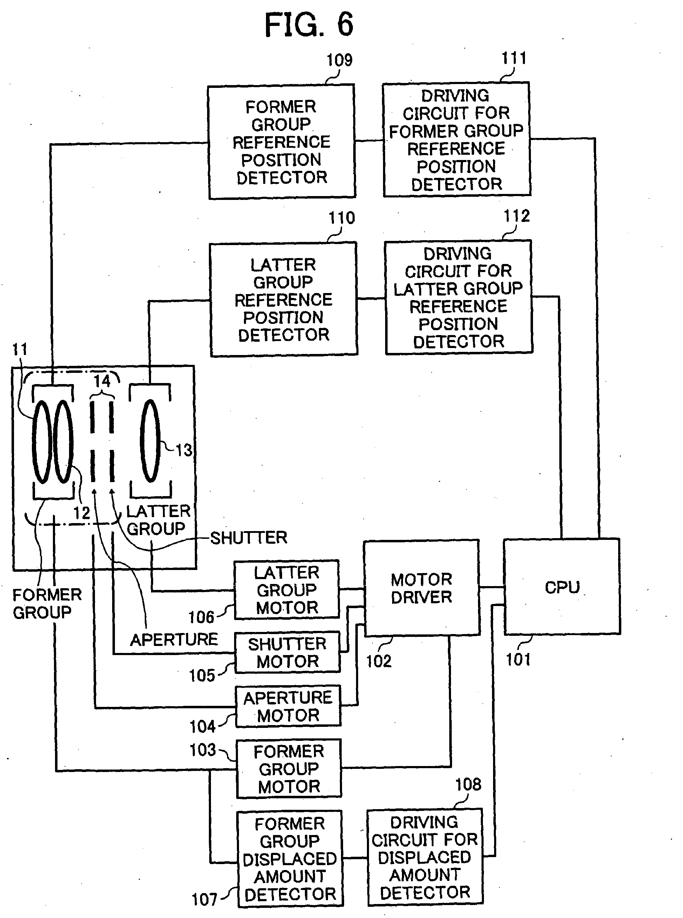

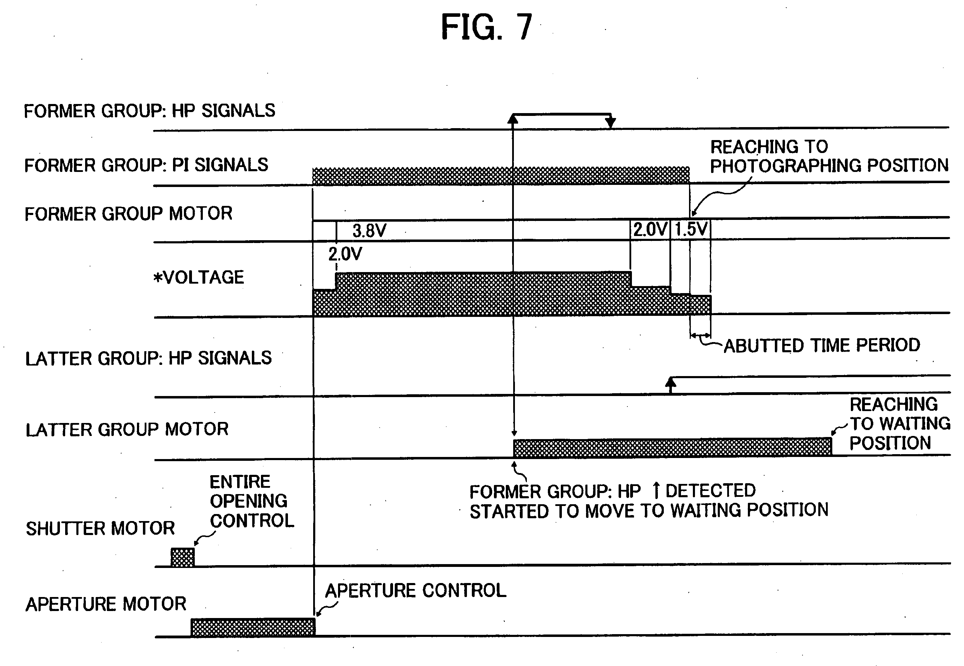

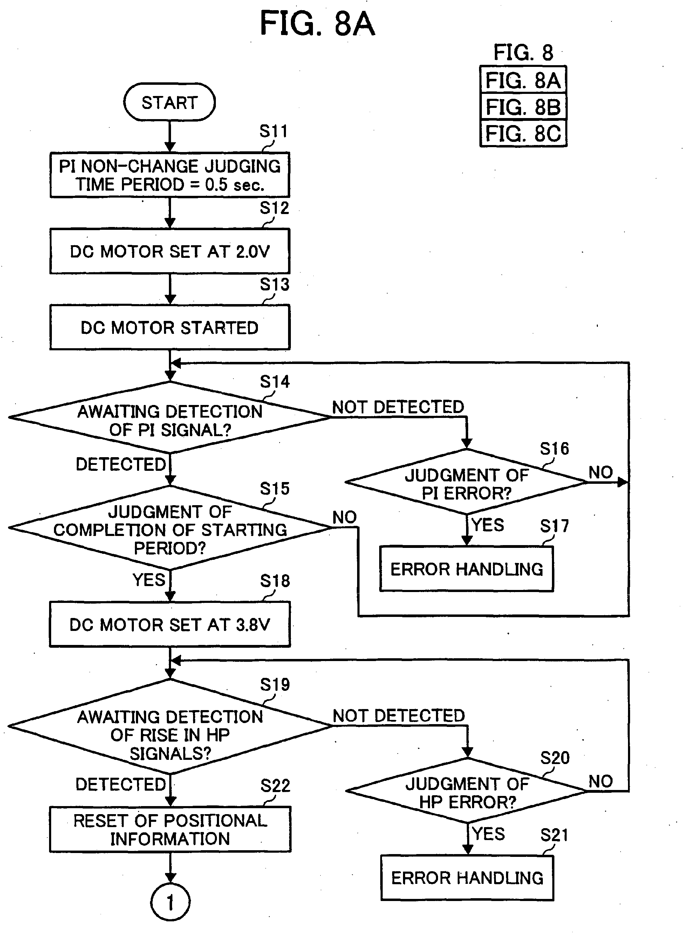

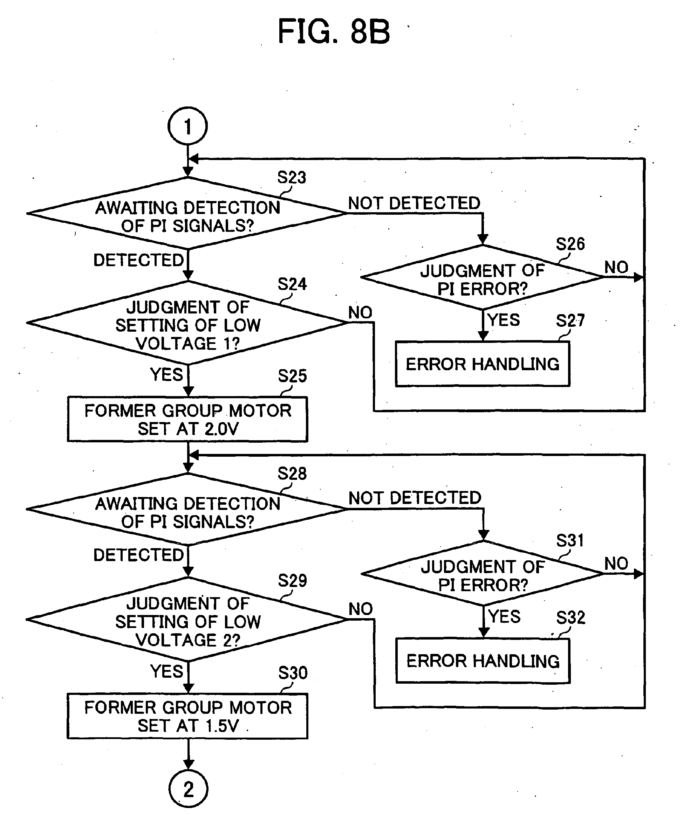

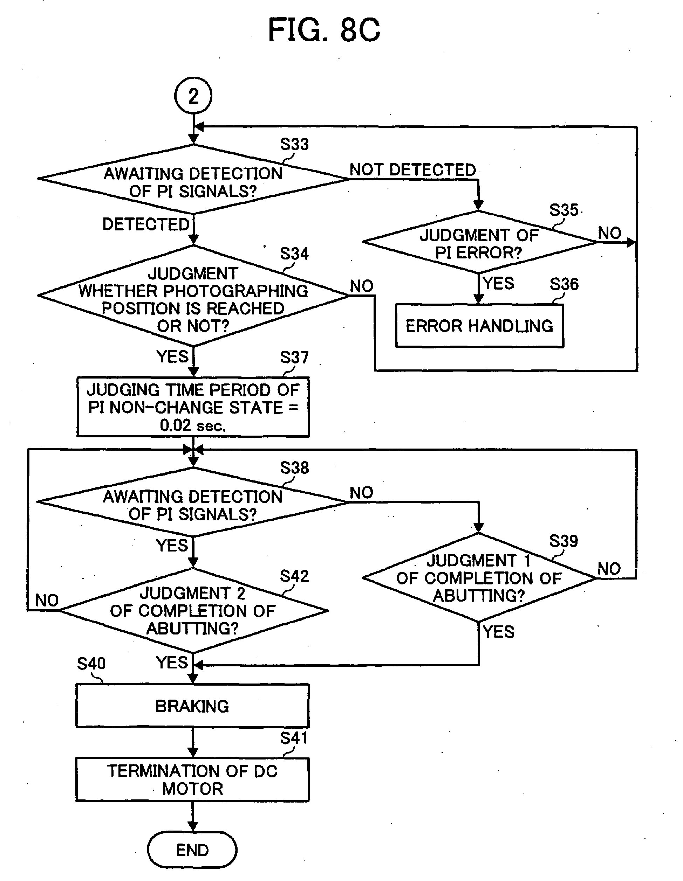

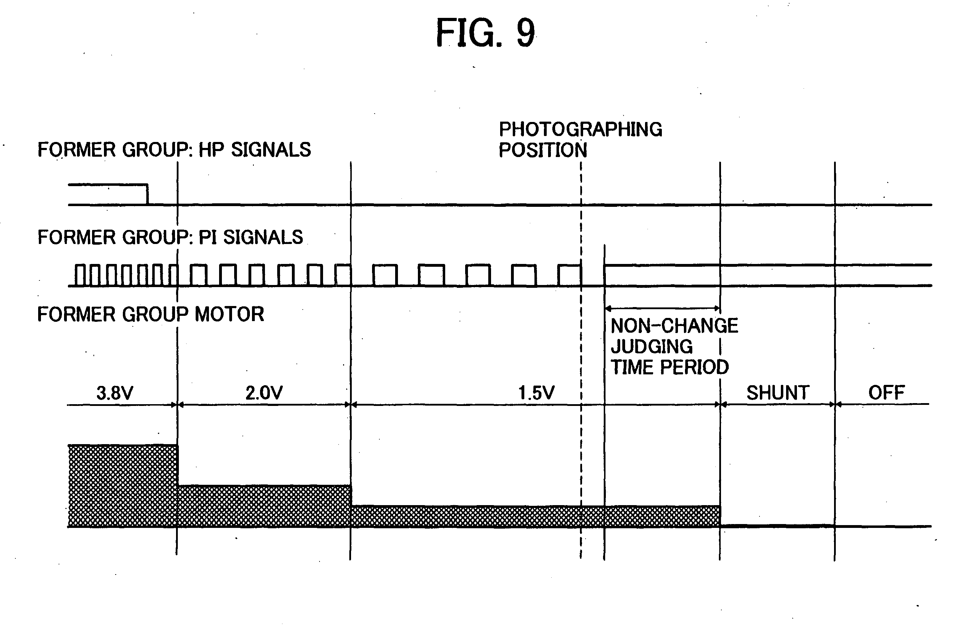

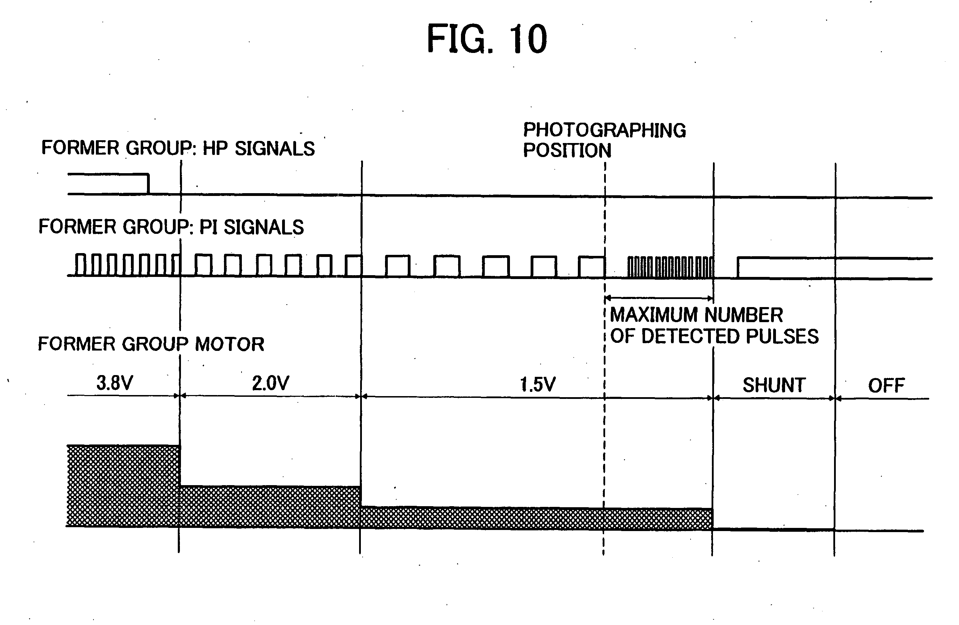

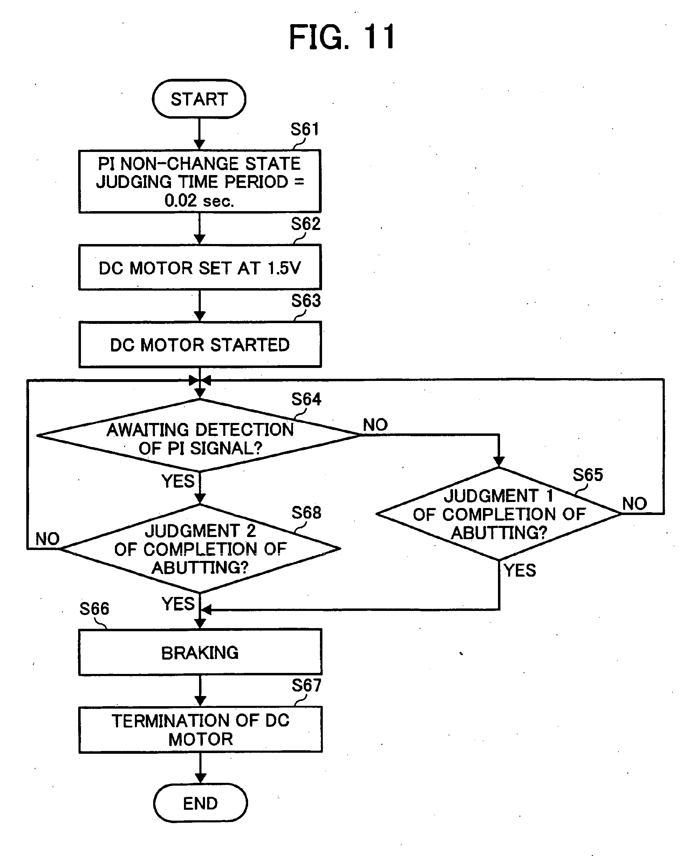

The second embodiment of the present invention will be explained in detail with reference to Figs. 6 to 11. Fig.6 is a block diagram schematically showing the construction of the lens barrel controller. Fig. 7 is a timing chart showing an operation sequence of the lens barrel from the collapsed state to the photographing state. Fig. 8 is a flow chart for illustrating a flow of operations of the lens barrel from the collapsed state to the photographing state. Fig.9 is a timing chart showing a detailed sequence of one state of abutting process near the photographing state. Fig. 10 is a timing chart showing the detail of a sequence of abutting near the photographing state in another condition. Fig. 11 is a timing chart showing a sequence of periodically repeated processings for appropriately maintaining the photographing state after the lens barrel reached the photographing state.

The controller shown in Fig. 6 comprises a CPU (central processing unit) 101, a motor driver 102, a former group motor 103, an aperture motor 104, a shutter motor 105, a latter group motor 106, a former group displaced amount detector 107, a displaced amount detector driving circuit 108, a former group reference position detector 109, a latter group reference position detector 110, a former group reference position detector driving circuit 111 and a latter group reference position detector driving circuit 112.

The CPU 101 default sets the motor driver 102, and controls the motors by transmitting commands as to selection of the driving motor (s), setting of the driving voltage, driving direction, etc. to the motor drive 102. The CPU 101 controls the power source of the former group displaced amount detector 107 via the displaced amount detector driving circuit 108, controls the power source of the former group reference position detector 109 via the former group reference position detector driving circuit 111, and controls the power source of the latter group reference position detector 110 via the latter group reference position detector driving circuit 12. The CUP 101 also receives detection signals from the former group displaced amount detector 107 via the displaced amount detector driving circuit 108, detection signals from the former group reference position detector 109 via the former group reference position detector driving circuit 111, and detection signals from the latter group reference position detector 110 through the latter group reference position detector driving circuit 112, and thus obtains the displaced amount detected information and the reference position detected information.

In compliance with commands from the CPU 101, the motor driver 102 controls the motor system including the former group motor 103 constituted by DC (direct current) motor or the like, the throttle motor 104 constituted by a pulse motor or the like, shutter motor 105 constituted by a moving magnet motor or the like, a latter group motor 106 such as a pulse motor or the like. In compliance with the command from the CPU101 sets a pre-designated driving voltage for a selected motor and supplying the electric power corresponding to the timing of the driving circuit.

In this state, as previously mentioned, the shutter unit 14 comprises an aperture and a shutter which are integrally constructed with one another. The former group constituted by the first lens group 11 and the second lens group 12 as well as the shutter unit 14 are moved according to respectively specified moving performances by means of the cam mechanism to be operated by the rotation of the rotary cylinders 18 and 20 commonly employed. Therefore, the former group motor 103 drives the first lens group 11, the second lens group 12 and the shutter unit 14. In this case, the first lens group 11, the second lens group 12 and the shutter unit 14 are independently driven via the cam mechanism to be driven in response to the driving force of the former group motor 103. The aperture motor 104 controls the aperture to any of three open degrees, an opened state, an intermediate open state or a minimum open state by driving the aperture of the shutter unit 104.

The shutter motor 105 opens or closes the shutter of the shutter unit 14. The latter group motor 106 drives the third lens group 13. The latter group motor 106 drives the third lens group 13. In this case, the third lens group performs focusing function, and the latter group motor 106 functions as a focusing motor.

Each of the former group displaced amount detector 107, the former group reference position detector 109 and the latter group reference position detector 110 obtains pulse signals through detection of light transmission/light shielding with use of a photo interrupter (PI) or photo reflector (PR). Therefore, the displaced amount detector driving circuit 108, the former group reference position detector driving circuit 111 and the latter group reference position detector driving circuit 112 function to correct the applied current intensities to the former group displaced amount detector 107, the former group reference position detector 109 and the latter group reference position detector 110 as well as the output levels from the former group displaced amount detector 107, the former group reference position detector 108 and the letter group reference position detector 110. According to the former displaced amount detector 107, an encoder constituted by a slit-shaped light-shielding plate rotates in synchronization with the rotation of the former group motor 103, and outputs pulse signals based on the detection of light transmission/light shielding with the photo interrupter.

Thus, the displaced amount of the former group is detected by counting the number of the pulse signals. Each of the former group reference position detector 109 and the latter group reference position detector 110 uses the photo interrupter or photo reflector to detect a change appearing from a L (low level) to H (high level) when the former group or the latter group reaches the reference position.

### (Starting sequence)

Next, a starting sequence from the collapsed state to the photographing state will be explained with reference to Fig. 7.

When controlling of the lens barrel is to be started, the default setting of the lens barrel driving system is first started. In the default setting, the motor driver 102 to drive and control each of the motors is subjected to the default setting, and the former group displaced amount detector 107, the former group reference position detector 109 and the latter group reference position detector 110 are subjected to the default setting. First, the entirely open control is performed by the shutter motor 105 for driving the shutter, so that the shutter of the shutter unit 14 is set in an entirely open state. Then, the aperture reset control is performed by the aperture motor 104, so that the aperture is set in an opened aperture state.

After the shutter and the aperture of the shutter unit 14 are started, the former group motor 103 is driven in the direction of the photographing position. The driven amount of the former motor 103 is detected by the former group displaced amount detector 107, so that the displaced amount is detected by counting edges of outputted pulse signals from the photo interrupter of the former group reference position detector 107.

During the starting time period immediately after the start of the former group motor 103, the driving voltage is set to a level lower than a stationary voltage so as to prevent excess incoming current into the DC motor (for example, if the stationary voltage is set at 3.8V, the driving voltage during the starting time period is set at 2.0 V). After the starting time period ended, the driving voltage of the former group motor 103 is raised to the stationary voltage (for example, 3.8V). Thereafter, it is awaited that the former group reference position detector 109 detects the reference position.

After the shutter and the aperture of the shutter unit 14 are started, the former group motor 103 is driven in the direction of the photographing position. The driven amount of the former group motor 103 is determined with the former group displaced amount detector 107, and the displaced amount is detected by counting edges of output pulse signals from the photo interrupter.

During the starting time immediately after the start of the former motor 103, the driving voltage is set to a voltage lower than the stationary voltage (for example, the stationary voltage 3.8V, and the driving voltage during the starting time period 2.0V). After the starting time period ended, the driving voltage of the former group motor 103 is raised to the stationary voltage (for example 3.8V). Thereafter, it is awaited that the reference position is detected by the former group reference position detector 109.

The reference position (home position: HP position) of the former group is the position where reference position signal (HP signals) detected by the former group reference position detector 109 changes from L to H. When it is detected that the former group reaches the reference position (HP position), the positional information of the former group is reset. The displaced amount of the former group up to the photographing position is controlled with reference to the HP position by counting the pulse signals (PI signals) with the former group displaced amount detector 107. The photographing position, which is predetermined and memorized, can be changed by using a rewritable involatile memory such as EEPROM as a memory medium.

The specified pulse time period before the former group reaches the photographing position is took as a stop control time period in which the driving voltage is lowered (for example, down to 2.0V to 1.5V) depending upon the number of the remaining pulses up to the photographing position. Thus, when the former group abuts a mechanical stopper at the photographing position, that is, when the cam followers 15a abut the end portions of the cam grooves 18c, any resulting impact can be suppressed. When the driving voltage is preliminarily lowered, the current generated at the time of the locked state can be suppressed, although the DC motor is locked at the time of the abutting. After the former group reaches the photographing position, the former group is continuously driven until it abuts the stopper mechanism. The state in which the former group abuts the stopper mechanism is judged depending upon the state of the detected signals (PI signals) from the former group displaced amount detector 107, so that the braking is controlled to stop the driving of the former group. The judgment of the state in which the former group abuts the stopper mechanism will be described later in detail.

When it is detected that the former group reaches the reference position (HP position), the latter group starts to be driven in the direction of the waiting position by the latter group motor 106, and the latter group is driven and controlled simultaneously with the former group until the former group stops. In this case, when the pulse rate of the latter group motor 106 using the pulse motor is set greater at the time of driving than that at the time of the ordinary driving, the driving time period of the latter group motor 106 is shortened. The latter group side waits for the detection of the reference position with the latter group reference position detector 110. The reference position (HP position) of the later group is the position in which the reference position signals CHP signals) with the latter group reference position detector change from L to H. When the reference position (HP position) of the latter group is detected, the positional information of the latter group is reset. Thereafter, the latter group is moved up to the waiting position with reference to the HP position by driving it based on pulses from the latter group pulse motor. The waiting position is predetermined and memorized. In this case, the waiting position can be changed by using a rewritable involatile memory such as EEPROM as the memory medium.

Next, driving and controlling of the former lens group and judgment of the former group to the stopper mechanism according to the above sequence will be explained in more detail with reference to Figs. 8, 9 and 10.

In the flow chart of Fig. 8, the maximum value (PI non-change judgment time period) of the change-waiting time period of the former group displaced amount detecting signals (PI signal before the start of the former group motor 103 constituted by the DC motor is set at 0.5 sec (STEP S11). Thereafter, the driving voltage of the former group motor 103 is set at 2.0 V, for example (STEP S12). Then, the former group motor 103 is started to be driven in the direction of the photographing position (STEP S13).

After the start of driving, the displaced amount signals are waited (STEP S11). When the displaced amount signal is detected, it is judged whether the starting time period has been completed or not (STEP S15). It is judged in STEP S15 whether the number of the detection counts of the displaced amount detection signals after the start of the driving reaches the specified number of pulses for the movement or not. If not completed, the process is returned to the position to wait for a displaced amount signal in STEP S14.

When no displaced amount signal is detected in the signal detection-waiting state, it is judged whether there is a detection error (PI error) or not (STEP S16). In STEP S16, it is judged whether or not the pulses of the displaced amount signals do not change for not less than a time period during which the PI does not changed, as counted from the time of the previous detection or the starting. When no change occurred for not less than the judging time period, error handling is performed (STEP S17). If the time period is less than the judging time period, the process is returned to wait for the displaced amount signal detection in STEP S14. Error handling in STEP S17 is performed by terminating the former group motor 103.

That is, the current flow to the DC motor is turned off. If it is judged that the starting time period in STEP S15 is terminated, the driving voltage for the DC motor is raised to 3.8 V in STEP S18.

Thereafter, rise in the reference position signal (HP signal) is waited for (STEP S19). If the no rise is detected, the reference position detection error (HP error) is judged (STEP 20). It is judged whether not less than the specified time period lapses from the start of driving without detection of the reference position signal or not. If the specified time period lapsed without detection of the reference signal, error handling is performed (STEP S21). The error handling is the same as that in the starting time period. If the rise in the reference position signal is detected, the position information is reset to set the number of driving pulses up to the photographing position (STEP S22).

After the positional information is reset, the displaced amount signal detection is awaited to set the first low voltage (low voltage 1) (STEP 23). Every time when the displaced amount signal is detected, the displaced amount is counted to perform the setting and judging the first low voltage (STEP S24). Judgment is performed in STEP S24 as to whether the number of the remaining driving pulses up to the photographing position reaches the set number of pulses for the first low voltage. If the former reaches the latter, the driving voltage of the DC motor is set to 2.0V (STEP S25). If the former does not reach the latter, the process is returned to the position for awaiting the detection of the position detection signal in STEP S23. This processing is repeated. In STEP S23, the position detecting signal is awaited. If no position detecting signal is detected, a detection error (PI error) is judged in the same manner as mentioned above (STEP S26). The contents of the judgment in STEP S26 and the error handling on judging the error (STEP S27) are same as mentioned above.

Detection of the displaced amount signal is awaited for setting a second low voltage (low voltage 2) (STEP S28). Every time when the displaced amount signal is detected, the displaced amount is counted, and it is judged whether the second low voltage is set or not (STEP S29). It is judged in STEP S29 whether the number of the remaining driving pulses up to the photographing position reaches the set pulses for the second low voltage. If it is judged that the former reaches the latter, the driving voltage of the DC motor is set to 1.5 V (STEP S30). If the former does not reach the latter, the process is returned to the position for awaiting the detection of the displaced amount of the displaced amount signal at STEP S28, and the processing is repeated. If no detection signal is detected in the state of awaiting the displaced amount signal at STEP S28, it is judged that the detection error occurs (STEP S31). The contents of the judgment in STEP S31 and the error handling in case of the judgment of the error (STEP S32) are the same as mentioned above.

Next, detecting of the displaced amount is awaited for judging as to whether the photographing position is reached or not (STEP S33). Every time when a displaced amount signal (PI signal) is detected, the displaced amount is counted. Thereby, it is judged whether the photographing position is reached or not (STEP S34). It is judged in STEP S34 whether the number of the remaining driving pulses up to the photographing position reaches zero pulse. If it is not reached, the process is returned to the position of awaiting the displaced amount signal in STEP S33, and the processing is repeated. If no displaced amount signal is detected in the case of awaiting the displaced amount signal at STEP S33, it is judged that the detection is error (STEP S35) as mentioned above. The judgment contents in STEP 35 and the error handling in the case of judgment of error (STEP 36) are the same as mentioned above. When the photographing position is reached, the maximum value (PI non-changed state judgment time period) of the time period for waiting for a change in the former group displaced amount detection signals is reset to 0.02 sec-, again (STEP S37).

In this way, since the non-changed state judgment time period of the displaced amount signal is shorter than that before the lens barrel reaches the photographing position, this reduces unnecessary current flow and mechanical impact when the former group abuts the sports the stopper mechanism. If the time period, before it reaches the photographing position, during which it is judged that no change occurs in the displaced amount is shortened, the lens barrel is stopped when being caught by external pressure such as holding with hand. Thus, that time period cannot greatly be set shortened. Thus, driving and controlling can be appropriately performed by switching the time period for judging no change in the displaced amount signal before and after the photographing position.

Thereafter, the displaced amount signal is detected (STEP S38). If no displaced amount signal is detected, it is judged that first abutting is completed (Judgment 1 that the abutting is completed is performed (STEP S39). It is judged in STEP S39 whether the displaced amount signal pulses do not change for not less than the PI non-changed state judging time period set at the time of previous detection of the displaced amount signal pulses or not. If it does not change for not less than that judgment time period, it is judged that the abutting is completed. Then, the braking (STEP S40) and termination of the DC motor (STEP S41) are performed.

As shown in Fig. 9, the lens barrel can be assuredly abutted against the stopper mechanism by continuously driving the DC motor until no change is seen in the displaced amount detection signal (PI signals). If the time period is less than the predetermined judgment one, the process is returned to a position for awaiting the detection of the displaced amount signal in STEP S38. When the displaced amount signal is detected in STEP S38, completion of a second abutting is judged (Judgment of the second completion of abutting) (STEP S42). As shown in FIG. 10, it is judged in STEP S42 that the number of the detected pulses after the lens barrel reaches the photographing position is not less than the preliminarily maximum number of the detected pulses. If the former is not less than the latter, it is judged that the abutting is completed. Then, the braking in STEP S40 and the termination of the DC motor in STEP S41 are performed.

When some limitation is posed upon the number of the detected counts of the displaced amount detection signals, the phenomenon that displaced amount detection signals continuously are outputted by repetition of abutting/returning for a long period may occur when the former group is abutted to the stopper mechanism. However, even if such a phenomenon occurs, the passage of current through the DC motor can be appropriately terminated. In STEP S42, the process is returned to the position in STEP S38 of waiting for the displaced amount, when the count of the pulses is less than the predetermined one in the judgment.

Further, even after the completion of the starting sequence in Fig. 7, the precision of the lens system can be maintained by repeatedly abutting the former group to the stopper mechanism at an arbitrary timing. That is, this will be a countermeasure against such as the external pressure pushing the tip of the mirror cylinder. Fig. 11 is a flow chart for such repeatedly abutting. When the treatment of Fig. 11 is effected every a specified time period, or periodically or at a predetermined timing, deviation from the photographing position can be avoided.

Before the DC motor is driven, the maximum value of the waiting time period is set 0.02 sec. for the displaced amount detection signals (PI signals) of the former group. Subsequently, the driving voltage of the DC motor is set at 1.5 V (STEP S62) equivalent to that after the photographing position is reached (STEP S62) in the processing of Fig. 8. Then, the DC motor is started to be driven toward the direction of the stopper mechanism (STEP S63). Thereafter, displaced amount detection signals (PI signals) are detected (STEP S64). If no displaced amount signal is detected, whether the lens barrel is first abutted to the stopper mechanism is judged (STEP S65) as in STEP S39 in Fig. 8. Judgment of the completion of the first abutting is performed in STEP S65 as to whether the displaced amount detection signal pulses do not change for not less than the PI non-changed state judgment time period at the time of previous detection or at the time of the start of the driving. If no change occurs for the judgment time period, it is judged that the abutting is completed, so that braking (STEP S66) and termination of the DC motor (STEP S67) are performed. If it is less than the judgment time period, the process is returned to the position for awaiting the detection of the displaced amount signal in STEP S64.

When the displaced amount signal is detected in STEP S64, it is judged in the same way as in STEP S42 of Fig. 8 that the second abutting is completed (STEP S68). It is judged in STEP S68 whether the number of the displaced amount signal detection pulses is not less than that of the maximum detection pulses or not after the photographing position is reached. If it is not less than the maximum number of the detection pulses, it is judged that the abutting is completed. Then, braking in STEP S66 and DC motor termination in STEP S67 are performed. If it is less than the maximum number of the detection pulses, the process is returned to the position of awaiting the detection of the displaced amount signal in STEP S64.

In the above embodiment, the completion of the abutting upon the stopper mechanism is determined based on the state of the displaced amount detection signals. However, it may simply be judged that the abutting is completed by passing current for a specified period, while ignoring the displaced amount detection signals.

Furthermore, in the above-mentioned embodiments, the abutted state is judged based on the changed state of the pulse signals through detection of the displaced amount from the pulse signals in synchronization with the rotation of the DC motor. The abutting may be judged based on the changed amount of the voltage through measuring the displaced amount as a voltage value with use of a resistor plate or the like.

Further, a camera such as a digital camera may be constituted by mounting the lens barrel or the lens barrel controller in the first or second embodiment. In addition, the lens barrel or lens barrel controller in the first or second embodiment may be mounted for the camera function of the personal digital assistant apparatus.

## Claims

1. A lens barrel comprising:
a plurality of lens groups (11, 12, 13) each comprising at least one lens;
a lens retaining frame (15, 16, 17) adapted to support one of said plurality of lens groups (11, 12, 13);
a cam follower (15a, 16a) provided on said lens retaining frame (15, 16); and
a rotary cylinder (18) having a cam groove (18c, 18d, 18e) adapted to engage with the cam follower (15a, 16a), said rotary cylinder (18) being configured to move forward and backward said lens retaining frame (15, 16) along an optical axis direction of the lens groups (11, 12, 13) through being rotated;
wherein the lens barrel is shifted from a collapsed state, in which the lens groups (11, 12, 13) are stored by collapsing at least part of said plurality of lens groups (11, 12, 13), to a photographing state by moving said at least part of the plurality of lens groups (11, 12, 13) toward a side of a subject, **characterised by**:
a liner member (19) having a straight groove (19b, 19c) adapted to engage with the cam follower (15a, 16a), said liner member (19) being configured to prevent the rotation of the lens retaining frame (15, 16) and allow forward and backward movement of the lens retaining frame (15, 16) along the optical axis direction, and in that:
the position of said one of the lens groups (11, 12, 13) is restrained by abutting said cam follower (15a) engaging with the cam groove (18c) upon a terminal end portion of the cam groove (18c) in the photographing state.

2. The lens barrel set forth in claim 1, wherein said one lens group of which the position is restrained through the cam follower (15a) being abutted upon the terminal end portion of said cam groove (18c) is a lens group (11) having the highest eccentricity sensitivity among said plurality of lens groups (11, 12; 13).

3. The lens barrel set forth in claim 1 or 2, which further comprises
another lens retaining frame (16) adapted to retain at least another lens group (12) among said plurality of lens groups (11, 12, 13); and
another cam follower (16a) provided on said another lens retaining frame and wherein said rotary cylinder (18) has another cam groove (18d) adapted to engage with said another cam follower (16a), said rotary cylinder (18) being configured to move said another lens retaining frame (16) forward and backward along said optical axis direction of the lens groups (11, 12, 13) through being rotated; and
wherein said liner member (19) has another straight groove (19c) adapted to engage with said another cam follower (16a) and to restrain rotation of said another lens retaining frame (16), said liner member (19) being configured to prevent the rotation of said another lens retaining frame (16) and allow forward and backward movement of said another lens retaining frame (16) along the optical axis direction; and
wherein the cam groove (18c) corresponding to said one lens group of which position is restrained through the cam follower (15a) being abutted upon the terminal end portion of the cam groove (18c) is formed with no play to be left at the terminal end portion in a photographing position in the photographing state, whereas the another straight groove (19c) and the another cam groove (18d) corresponding to said another lens group (12) are each formed to leave an appropriate play along a direction of the straight groove or the cam groove without being ended at the position in the photographing state.

4. The lens barrel set forth in any one of claims 1 to 3 further comprising control means operative when the lens barrel is moved from the collapsed state to the photographing state for lowering a driving speed of said rotary cylinder (18) before the lens barrel reaches the photographing state, and for stopping the driving of the rotary cylinder (18) after the elapse of a predetermined time period after the lens barrel reaches the photographing state.

5. The lens barrel set forth in claim 4, further comprising means tor detecting position count information corresponding to a driven amount of said rotary cylinder (18) during said predetermined time period, wherein the control means is operative to stop the driving of the rotary cylinder (18) by judging termination of said predetermined time period at a point of time when the number of counts reaches a predetermined maximum count.

6. The lens barrel set forth in claim 4, wherein said control means comprises timing means to judge the elapse of said predetermined time period.

7. The lens barrel set forth in claim 4, wherein said control means is configured to repeat an operation that the rotary cylinder (18) was driven for said predetermined time period at least one of every a preset time interval and a desired timing after the lens barrel has reached the photographing state and then said predetermined time period has elapsed and the driving of the rotary cylinder (18) has been stopped.

8. A camera comprising an optical system using a lens barrel according to any one of claims 1 to 7 as a photographing optical system.

9. A personal digital assistant apparatus having a camera functional portion, and comprising an optical system including a lens barrel according to any one of claims 1 to 7 as a photographing optical system of the camera functional portion.

10. A lens barrel controller configured to control a lens barrel according to any one of claims 1 to 7, said lens barrel controller comprising:
a driving unit for driving the rotary cylinder;
a displaced amount detector for generating a positional information signal depending upon a driven amount of the rotary cylinder by the driving unit; and
a control unit for driving and controlling the displaced amount of the rotary cylinder by the driving unit, based on detection with the displaced amount detector;
said control unit comprising a stopping unit for stopping the driving of the rotary cylinder with the driving unit when the control unit judges based on a state of the positional information signals from the displaced amount detector that the positions of the lens groups are in a restrained state.

11. The lens barrel controller set forth in claim 10, which comprises a judging unit for judging whether there is a change in the state of the positional information signals from the displaced amount detector or not, and
wherein the judging unit judges that there is no change in the state, when no change is seen in the state of said positional information signal for not less than a preset judging time period; and when the judging unit judges that there is no change in the state of the positional information signals, the control unit judges that the positions of the lens groups are in the restrained state and the driving of the rotary cylinder with the driving unit is stopped.

12. The lens barrel controller set forth in claim 11, wherein considering that said preset judging time period is constituted by a first judging time period before the rotary cylinder reaches the photographing position and a second judging time period after the rotary cylinder reached the photographing position, said second judging time period is shorter than the first one.

13. A camera comprising a controller including a lens barrel controller according to any one of claims 10 to 12 as a controller for a photographing optical system.

14. A personal digital assistant apparatus having a camera functional portion and comprising a controller including a lens barrel controller according to any one of claims 10 to 12 as a controller for a photographing optical system of the camera functioning portion.

## Patentansprüche

1. Objektivtubus, der umfasst
mehrere Linsengruppen (11, 12, 13), wovon jede wenigstens eine Linse umfasst; einen Linsenhalterahmen (15, 16, 17), der beschaffen ist, um eine der mehreren Linsengruppen (11, 12, 13) zu stützen;
einen Nockenstößel (15a, 16a), der an dem Linsenhalterahmen (15, 16) vorgesehen ist; und
einen Drehzylinder (18), der eine Nockennut (18c, 18d, 18e) besitzt, die beschaffen ist, um sich mit dem Nockenstößel (15a, 16a) in Eingriff zu befinden, wobei der Drehzylinder (18) konfiguriert ist, um den Linsenhalterahmen (15, 16) entlang der Richtung einer optischen Achse der Linsengruppen (11, 12, 13) vorwärts und rückwärts zu bewegen, indem er gedreht wird;
wobei der Objektivtubus aus einem zusammengeschobenen Zustand, in dem die Linsengruppen (11, 12, 13) gelagert sind, indem wenigstens ein Teil der mehreren Linsengruppen (11, 12, 13) zusammengeschobenen ist, in einen Photographierzustand verschoben wird, indem wenigstens ein Teil der mehreren Linsengruppen (11, 12, 13) zu einer Seite eines Objekts bewegt wird, **gekennzeichnet durch**:
ein Buchsenelement (19) mit einer geraden Nut (19b, 19c), das beschaffen ist, um sich mit dem Nockenstößel (15a, 16a) in Eingriff zu befinden, wobei das Buchsenelement (19) konfiguriert ist, um die Drehung des Linsenhalterahmens (15, 16) zu verhindern und die Vorwärts- und Rückwärtsbewegung des Linsenhalterahmens (15, 16) entlang der Richtung der optischen Achse zu erlauben, und **dadurch gekennzeichnet, dass**:
die Position der einen der Linsengruppen (11, 12, 13) eingeschränkt ist, indem der Nockenstößel (15a), der sich mit der Nockennut (18c) in Eingriff befindet, in dem Photographierzustand an einen Endabschnitt der Nockennut (18c) anstößt.

2. Objektivtubus nach Anspruch 1, wobei die eine Linsengruppe, deren Position durch den Nockenstößel (15a), der an den Endabschnitt der Nockennut (18c) anstößt, eingeschränkt ist, eine Linsengruppe (11) ist, die unter den mehreren Linsengruppen (11, 12; 13) die höchste Exzentrizitätsempfindlichkeit besitzt.

3. Objektivtubus nach Anspruch 1 oder 2, der ferner umfasst:
einen weiteren Linsenhalterahmen (16), der beschaffen ist, um wenigstens eine weitere Linsengruppe (12) unter den mehreren Linsengruppen (11, 12, 13) zu halten; und
einen weiteren Nockenstößel (16a), der an dem weiteren Linsenhalterahmen vorgesehen ist, wobei der Drehzylinder (18) eine weitere Nockennut (18d) besitzt, die beschaffen ist, um sich mit dem weiteren Nockenstößel (16a) in Eingriff zu befinden, wobei der Drehzylinder (18) konfiguriert ist, um den weiteren Linsenhalterahmen (16) entlang der Richtung der optischen Achse der Linsengruppen (11, 12, 13) vorwärts und rückwärts zu bewegen, indem er gedreht wird; und
wobei das Buchsenelement (19) eine weitere gerade Nut (19) besitzt, die beschaffen ist, um sich mit dem weiteren Nockenstößel (16a) in Eingriff zu befinden, um die Drehung des weiteren Linsenhalterahmens (16) einzuschränken, wobei das Buchsenelement (19) konfiguriert ist, um die Drehung des weiteren Linsenhalterahmens (16) zu verhindern und um die Vorwärts- und Rückwärtsbewegung des weiteren Linsenhalterahmens (16) entlang der Richtung der optischen Achse zu erlauben; und
wobei die Nockennut (18c), die der einen Linsengruppe entspricht, deren Position durch den Nockenstößel (15a) eingeschränkt ist, der an den Endabschnitt der Nockennut (18c) anstößt, ohne Spiel ausgebildet ist, um im Photographierzustand in einer Photographierposition an dem Endabschnitt gelassen zu werden, wohingegen die weitere gerade Nut (19c) und die weitere Nockennut (18d), die der weiteren Linsengruppe (12) entsprechen, jede ausgebildet sind, um ein geeignetes Spiel entlang einer Richtung der geraden Nut oder der Nockennut zu lassen, ohne in der Position im Photographierzustand zu enden.

4. Objektivtubus nach einem der Ansprüche 1 bis 3, der ferner Steuermittel umfasst, die betriebsfähig sind, um, wenn der Objektivtubus aus dem zusammengeschobenen Zustand in den Photographierzustand bewegt wird, die Antriebsgeschwindigkeit des Drehzylinders (18) zu verringern, bevor der Objektivtubus den Photographierzustand erreicht, und um nach dem Verstreichen einer vorgegebenen Zeitdauer, nachdem der Objektivtubus den Photographierzustand erreicht hat, das Antreiben des Drehzylinders (18) anzuhalten.

5. Objektivtubus nach Anspruch 4, der ferner Mittel zum Detektieren der Positionszählerstandsinformationen umfasst, die einem angetriebenen Betrag des Drehzylinders (18) während der vorgegebenen Zeitdauer entsprechen, wobei die Steuermittel betriebsfähig sind, um das Antreiben des Drehzylinders (18) anzuhalten, indem das Ende der vorgegebenen Zeitdauer zu einem Zeitpunkt beurteilt wird, zu dem die Zahl der Zählerstände einen vorgegebenen maximalen Zählerstand erreicht.

6. Objektivtubus nach Anspruch 4, wobei die Steuermittel Zeitsteuerungsmittel umfassen, um das Verstreichen der vorgegebenen Zeitdauer zu beurteilen.

7. Objektivtubus nach Anspruch 4, wobei die Steuermittel konfiguriert sind, um eine Operation zu wiederholen, in der der Drehzylinder (18) während der vorgegebenen Zeitdauer in jedem vorgegebenen Zeitintervall und/oder mit einer gewünschten Zeitvorgabe, nachdem der Objektivtubus den Photographierzustand erreicht hat, angetrieben wird und, wenn die vorgegebene Zeitdauer verstrichen ist, das Antreiben des Drehzylinders (18) angehalten wird.

8. Kamera, die ein optisches System umfasst, das einen Objektivtubus nach einem der Ansprüche 1 bis 7 als ein optisches Photographiersystem verwendet.

9. Persönliche digitale Assistentenvorrichtung mit einem Kamerafunktionsabschnitt, die ein optisches System umfasst, das einen Objektivtubus nach einem der Ansprüche 1 bis 7 als ein optisches Photographiersystem des Kamerafunktionsabschnitts enthält.

10. Objektivtubus-Steuereinrichtung, die konfiguriert ist, um einen Objektivtubus nach einem der Ansprüche 1 bis 7 zu steuern, wobei die Objektivtubus-Steuereinrichtung umfasst:
eine Antriebseinheit zum Antreiben des Drehzylinders;
einen Verschiebungsbetragdetektor zum Erzeugen eines Positionsinformationssignals in Abhängigkeit von einem angetriebenen Betrag des Drehzylinders durch die Antriebseinheit; und
eine Steuereinheit zum Antreiben und Steuern des Verschiebungsbetrags des Drehzylinders durch die Antriebseinheit basierend auf der Detektion mit dem Verschiebungsbetragdetektor;
wobei die Steuereinheit eine Anhalteeinheit zum Anhalten des Antreibens des Drehzylinders mit der Antriebseinheit umfasst, wenn die Steuereinheit basierend auf einem Zustand der Positionsinformationssignale von dem Verschiebungsbetragdetektor beurteilt, dass sich die Positionen der Linsengruppen in einem eingeschränkten Zustand befinden.

11. Objektivtubus-Steuereinrichtung nach Anspruch 10, die eine Beurteilungseinheit zum Beurteilen umfasst, ob es eine Änderung im Zustand der Positionsinformationssignale von dem Verschiebungsbetragdetektor gibt, und
wobei die Beurteilungseinheit beurteilt, dass es keine Änderung im Zustand gibt, wenn im Zustand des Positionsinformationssignals für nicht weniger als eine vorgegebene Beurteilungszeitperiode keine Änderung gesehen wird; wobei, wenn die Beurteilungseinheit beurteilt, dass es keine Änderung im Zustand der Positionsinformationssignale gibt, die Steuereinheit beurteilt, dass sich die Positionen der Linsengruppen in dem eingeschränkten Zustand befinden, wobei das Antreiben des Drehzylinders mit der Antriebseinheit angehalten wird.

12. Objektivtubus-Steuereinrichtung nach Anspruch 11, wobei unter Berücksichtigung dessen, dass die vorgegebene Beurteilungszeitdauer durch eine erste Beurteilungszeitdauer, bevor der Drehzylinder die Photographierposition erreicht, und eine zweite Beurteilungszeitdauer, nachdem der Drehzylinder die Photographierposition erreicht hat, gebildet ist, die zweite Beurteilungszeitdauer kürzer als die erste ist.

13. Kamera, die eine Steuereinrichtung, die eine Objektivtubus-Steuereinrichtung nach einem der Ansprüche 10 bis 12 enthält, als eine Steuereinrichtung für ein optisches Photographiersystem umfasst.

14. Persönliche digitale Assistentenvorrichtung mit einem Kamerafunktionsabschnitt, die eine Steuereinrichtung, die eine Objektivtubus-Steuereinrichtung nach einem der Ansprüche 10 bis 12 enthält, als eine Steuereinrichtung für ein optisches Photographiersystem des Kamerafunktionsabschnitts umfasst.

## Revendications

1. Barillet de lentilles comprenant :
une pluralité de groupes de lentilles (11, 12, 13) comprenant chacun au moins une lentille ;
un cadre de retenue de lentilles (15, 16, 17) adapté pour supporter l'un de ladite pluralité de groupes de lentilles (11, 12, 13) ;
un galet de came (15a, 16a) placé sur ledit cadre de retenue de lentilles (15, 16) ; et
un cylindre tournant (18) comportant une rainure de came (18c, 18d, 18e) adaptée pour venir en prise avec le galet de came (15a, 16a), ledit cylindre tournant (18) étant configuré pour déplacer vers l'avant et vers l'arrière ledit cadre de retenue de lentilles (15, 16) le long d'une direction d'axe optique des groupes de lentilles (11, 12, 13) par sa rotation ;
dans lequel le barillet de lentilles est décalé d'un état replié, dans lequel les groupes de lentilles (11, 12, 13) sont stockés en repliant au moins une partie de ladite pluralité de groupes de lentilles (11, 12, 13), vers un état de prise de vues en déplaçant ladite au moins une partie de ladite pluralité de groupes de lentilles (11, 12, 13) vers un côté d'un sujet, **caractérisé par** :
un élément de chemise (19) comportant une rainure droite (19b, 19c) adaptée pour venir en prise avec le galet de came (15a, 16a), ledit élément de chemise (19) étant configuré pour empêcher la rotation du cadre de retenue de lentilles (15, 16) et permettre le déplacement vers l'avant et vers l'arrière du cadre de retenue de lentilles (15, 16) le long de la direction de l'axe optique, et en ce que :
la position dudit un des groupes de lentilles (11, 12, 13) est restreinte par la venue en butée dudit galet de came (15a) venant en prise avec la rainure de came (18c) sur une partie d'extrémité terminale de la rainure de came (18c) dans l'état de prise de vues.

2. Barillet de lentilles selon la revendication 1, dans lequel ledit un groupe de lentilles dont la position est restreinte par la venue en butée du galet de came (15a) sur la partie d'extrémité terminale de ladite rainure de came (18c) est un groupe de lentilles (11) ayant la plus grande sensibilité à l'excentricité parmi ladite pluralité de groupes de lentilles (11, 12, 13).

3. Barillet de lentilles selon la revendication 1 ou 2, qui comprend en outre
un autre cadre de retenue de lentilles (16) adapté pour retenir au moins un autre groupe de lentilles (12) parmi ladite pluralité de groupes de lentilles (11, 12, 13) ; et
un autre galet de came (16a) placé sur ledit autre cadre de retenue de lentilles et dans lequel ledit cylindre tournant (18) comporte une autre rainure de came (18d) adaptée pour venir en prise avec ledit autre galet de came (16a), ledit cylindre tournant (18) étant configuré pour déplacer ledit autre cadre de retenue de lentilles (16) vers l'avant et vers l'arrière le long de ladite direction d'axe optique des groupes de lentilles (11, 12, 13) par sa rotation ; et
dans lequel ledit élément de chemise (19) comporte une autre rainure droite (19c) adaptée pour venir en prise avec ledit autre galet de came (16a) et pour restreindre la rotation dudit autre cadre de retenue de lentilles (16), ledit élément de chemise (19) étant configuré pour empêcher la rotation dudit autre cadre de retenue de lentilles (16) et permettre le déplacement vers l'avant et vers l'arrière dudit autre cadre de retenue de lentilles (16) le long de la direction d'axe optique ; et
dans lequel la rainure de came (18c) correspondant au dit un groupe de lentilles dont la position est restreinte par la venue en butée du galet de came (15a) sur la partie d'extrémité terminale de la rainure de came (18c) est formée sans laisser de jeu au niveau de la partie d'extrémité terminale dans une position de prise de vues dans l'état de prise de vues, alors que l'autre rainure droite (19c) et l'autre rainure de came (18d) correspondant au dit autre groupe de lentilles (12) sont chacune formées pour laisser un jeu approprié le long d'une direction de la rainure droite ou de la rainure de came sans se terminer dans la position de l'état de prise de vues.

4. Barillet de lentilles selon l'une quelconque des revendications 1 à 3 comprenant en outre des moyens de commande pouvant fonctionner quand le barillet de lentilles est déplacé de l'état replié à l'état de prise de vues pour abaisser une vitesse d'entraînement dudit cylindre tournant (18) avant que le barillet de lentilles n'atteigne l'état de prise de vues, et pour arrêter l'entraînement du cylindre tournant (18) après l'écoulement d'une période de temps prédéterminée après que le barillet de lentilles à atteint l'état de prise de vues.

5. Barillet de lentilles selon la revendication 4, comprenant en outre des moyens pour détecter une information de comptage de position correspondant à une quantité d'entraînement dudit cylindre tournant (18) pendant ladite période de temps prédéterminée, dans lequel les moyens de commande peuvent fonctionner pour stopper l'entraînement du cylindre tournant (18) en jugeant de la fin de ladite période de temps prédéterminée à un instant où le nombre de comptes atteint un compte maximum prédéterminé.

6. Barillet de lentilles selon la revendication 4, dans lequel lesdits moyens de commande comprennent des moyens de chronométrage pour juger de l'écoulement de ladite période de temps prédéterminée.

7. Barillet de lentilles selon la revendication 4, dans lequel lesdits moyens de commande sont configurés pour répéter une opération que le cylindre tournant (18) a été entraîné pendant ladite période de temps prédéterminée au moins l'un de chaque intervalle de temps préétabli et d'un moment souhaité après que le barillet de lentilles a atteint l'état de prise de vues et ensuite la période de temps prédéterminée s'est écoulée et l'entraînement du cylindre tournant (18) a été stoppé.

8. Appareil photo comprenant un système optique utilisant un barillet de lentilles selon l'une quelconque des revendications 1 à 7 comme système optique de prise de vues.

9. Appareil d'assistant numérique personnel comportant une partie ayant une fonction d'appareil photo, et comprenant un système optique incluant un barillet de lentilles selon l'une quelconque des revendications 1 à 7 comme système optique de prise de vues de la partie ayant une fonction d'appareil photo.

10. Commande de barillet de lentilles configurée pour commander un barillet de lentilles selon l'une quelconque des revendications 1 à 7, ledit barillet comprenant :
une unité d'entraînement pour entraîner le cylindre tournant ;
un détecteur de quantité de déplacement pour générer un signal d'information positionnelle en fonction d'une quantité d'entraînement de cylindre tournant par l'unité d'entraînement ; et
une unité de commande pour entraîner et commander la quantité de déplacement du cylindre tournant par l'unité d'entraînement, en fonction de la détection avec le détecteur de quantité de déplacement ;
ladite unité de commande comprenant une unité d'arrêt pour arrêter l'entraînement du cylindre tournant avec l'unité d'entraînement quand l'unité de commande juge d'après un état des signaux d'information de position venant du détecteur de quantité déplacé que les positions des groupes de lentilles sont dans un état restreint.

11. Commande de barillet de lentilles selon la revendication 10, qui comprend une unité de jugement pour juger s'il y a un changement dans l'état des signaux d'information positionnelle venant du détecteur de quantité de déplacement ou non, et
dans laquelle l'unité de jugement juge qu'il n'y a pas de changement d'état, quand aucun changement n'est vu dans l'état dudit signal d'information de position pour pas moins qu'une période de temps préétablie ; et quand l'unité de jugement juge qu'il n'y a pas de changement dans l'état des signaux d'information de position, l'unité de jugement juge que les positions des groupes de lentilles sont dans l'état restreint et l'entraînement du cylindre tournant avec l'unité d'entraînement est stoppé.

12. Commande de barillet de lentilles selon la revendication 11, dans lequel considérant que ladite période de temps de jugement préétablie est constituée par une première période de temps de jugement avant que le cylindre tournant atteigne la position de prise de vues et une seconde période de temps de jugement après que le cylindre tournant a atteint la position de prise de vues, ladite seconde période de temps de jugement est plus courte que la première.

13. Appareil photo comprenant une commande incluant une commande de barillet de lentilles selon l'une quelconque des revendications des revendications 10 à 12 comme commande pour un système optique de prise de vues.

14. Appareil d'assistant numérique personnel comportant une partie ayant une fonction d'appareil photo et comprenant une commande incluant une commande de barillet de lentilles selon l'une quelconque des revendications 10 à 12 comme commande pour un système optique de prise de vues de la partie ayant une fonction d'appareil photo.
